# FASCICULE DE BREVET EUROPEEN

(11) **EP 2 597 959 B1**
(45) Date de publication et mention de la délivrance du brevet: **29.10.2014**
(21) Numéro de dépôt: 11743275.7
(22) Date de dépôt: 30.06.2011
(51) Int. Cl.: A22C 29/04

(54) **PROCEDE ET DISPOSITIF DE DECORTICAGE DE MOLLUSQUES MARINS POURVUS D'UNE COQUILLE**
VORRICHTUNG UND VERFAHREN ZUM SCHÄLEN VON SCHALENTIEREN
DEVICE AND PROCESS FOR SHUCKING SHELLFISH

(30) Priorité: 27.07.2010 FR 1003140
(43) Date de publication de la demande: 05.06.2013
(73) Titulaire: Slipper Limpet Processing, 35260 Cancale (FR)
(72) Inventeur: CLEMENT, Pierrick, F-29460 L'Hôpital Camfrout (FR); BOUCHER-DOIGNEAU, Hervé, F-17400 Saint Jean d'Angely (FR)
(74) Mandataire: Hamann, Jean-Christophe
(86) Numéro de dépôt international: PCT/FR2011/051531
(87) Numéro de publication internationale: WO 2012/013882

(56) Documents cités:
- AU-B2- 445 729
- FR-A1- 2 934 118
- US-A- 3 203 034

## Description

La présente invention concerne, d'une façon générale, un procédé et un dispositif de décorticage à froid de mollusques marins monovalves ou bivalves, ces mollusques arrivant par groupes entraînés dans un flux liquide.

Plus particulièrement mais de manière non limitative, les mollusques peuvent être des mollusques gastéropodes monovalves, notamment des crépidules, mollusques monovalves compétiteurs spatiaux de certains coquillages comme huîtres ou coquilles Saint-Jacques. Ces gastéropodes marins sont comestibles et utilisés en alimentation humaine depuis des millénaires sur les côtes où elles sont endémiques.

Le problème de la récupération des chairs des mollusques est dû au décorticage de ces mollusques, opération pendant laquelle la chair du mollusque est séparée de sa coquille est longue et coûteuse et se fait difficilement industriellement et avec peu de fiabilité, et la rupture entre les chairs et les coquilles étant souvent incomplète avec présence de morceaux de coquilles dans les chairs récupérées ou, au contraire, évacuation de chairs dans les morceaux de coquille à évacuer.

Le document FR-A-2 934 118 décrit un procédé de décorticage de mollusques avec une étape de déversement des mollusques dans un bain de saumure, une étape de transfert dans un bain d'eau turbulent dans lequel on soumet les mollusques à des mouvements et à des chocs répétés provoquant la rupture des zones d'attache des chairs avec leur coquille, une étape de séparation des chairs des coquilles.

Comme décrit dans ce document, en raison du brassage au moyen de jets d'air et/ou d'eau auxquels les mollusques sont concomitamment soumis, ils s'entrechoquent tout en progressant dans le bain ce qui a pour effet de détacher et de séparer les chairs des coquilles.

L'utilisation d'un jet d'air et/ou d'eau peut aussi être insuffisante pour permettre une bonne séparation des chairs détachées d'avec les morceaux de coquilles. Ainsi, des morceaux de coquilles peuvent se trouver emportés avec les chairs et inversement des chairs peuvent être évacuées avec des morceaux de coquilles, ce qui représente une perte de produits comestibles. Par ailleurs dans ce document, les chairs étant passées dans la saumure, celles-ci peuvent être impropres à la consommation.

La présente invention a pour but d'élaborer un procédé et un dispositif pour le décorticage de mollusques marins pourvus d'une coquille qui soit efficace au niveau de la séparation des chairs et des coquilles ainsi qu'une obtention des chairs récupérées, d'une part, sans perte de matière et, d'autre part, sans présence de morceaux de coquille ou d'impuretés.

A cet effet, l'invention a pour objet un procédé de décorticage de mollusques marins pourvus d'une coquille, ces mollusques arrivant par groupes dans un flux liquide, ce procédé comprenant les étapes suivantes :
- acheminement à contre courant d'un groupe de mollusques dans son flux liquide vers un bloc de décorticage comportant un élément de frappe,
- décorticage des mollusques du groupe dans son flux liquide par choc avec l'élément de frappe et séparation des chairs d'avec les coquilles des mollusques du fait de cette frappe, une majeure partie des coquilles, d'une part, et les chairs contenant le reste des coquilles, d'autre part, étant évacuées séparément dans un flux liquide respectif,
- pour le flux liquide des chairs contenant le reste des coquilles, séparation des chairs et du reste des coquilles ou autres impuretés,
- nettoyage des chairs et séparation des flottants et impuretés par étape de dégrillage vibrant, de bullage et de microbullage,
- séchage des chairs avec élimination des impuretés restantes mêlées à ces chairs par soufflage.

Avantageusement, l'étape de décorticage des mollusques se fait sous agitation mécanique.

Avantageusement, les groupes sont préalablement surgelés et nettoyés avant l'étape d'acheminement, l'étape d'acheminement comportant une étape de décongélation du groupe avec récupération des calories du groupe du système mécanique de génération de froid.

L'invention concerne également un dispositif de décorticage de mollusques marins pourvus d'une coquille, ces mollusques arrivant par groupe dans un flux liquide, ce dispositif comprenant :
- un cylindre d'admission du groupe de mollusques, ce cylindre étant sensiblement en position horizontale, recevant le groupe de mollusques par une première extrémité en étant au moins partiellement rempli d'un flux liquide entraînant ledit groupe et muni d'une vis sans fin dans sa longueur afin d'entraîner le groupe vers la seconde extrémité du cylindre,
- au moins un premier cylindre vertical de décorticage des mollusques du groupe dans un flux liquide par choc avec séparation des chairs et des coquilles des mollusques, ledit cylindre présentant une hélice de frappe et une hélice de brassage créant un courant ascendant dans le cylindre ainsi qu'une bouche d'entrée latérale d'un jet liquide sous pression, la majeure partie des coquilles frappées par l'hélice de frappe tombant au fond du cylindre de décorticage tandis que l'hélice de brassage et le jet liquide créent un courant ascendant remontant les chairs et le reste des coquilles ou autres impuretés évacuées par débordement en aval du dispositif,
- au moins une installation de triage séparant les chairs du reste des coquilles ou autres impuretés,
- au moins une installation de séchage des chairs avec élimination des impuretés restantes mêlées à ces chairs par soufflage.

Selon des caractéristiques additionnelles de la présente invention :
- il est prévu un second cylindre de décorticage, la partie inférieure du cylindre de décorticage le plus en amont communiquant avec le cylindre de décorticage le plus en aval par une trappe d'ouverture, le cylindre de décorticage le plus en aval présentant des hélices de frappe et de brassage ainsi qu'une bouche d'entrée latérale d'un jet liquide sous pression similaires au cylindre de décorticage le plus en amont.
- l'installation de triage est une installation de criblage comprenant des barres vibrantes parallèles entre elles sous un arrosage de liquide par au moins une rampe, la distance entre barres vibrantes étant déterminée pour laisser passer les chairs tout en retenant les morceaux de coquilles.
- après le cylindre de décorticage le plus en aval, il est prévu au moins un bain à bulles rempli de liquide en tant qu'installation de triage.
- le dispositif comporte un bain à micro-bulles faisant remonter les impuretés et les évacuant par débordement du bain et filtration, notamment par filtres en mousse, les chairs plus lourdes et plus grosses n'étant pas remontées par le flux de micro-bulles qui sont trop petites et les impuretés étant récupérées en fond de bain à double paroi.
- le dispositif comporte deux bains à bulles consécutifs, le premier bain étant à grosses bulles faisant remonter les chairs et évacuant les impuretés les plus lourdes du type coquilles, tandis que le second bain est à micro-bulles faisant remonter les impuretés légères flottantes du type micro-algues et les évacuant par débordement du bain, les chairs étant récupérées en fond de bain.
- l'installation de séchage des chairs comprend un tapis à mailles soumis à sa partie de réception des chairs à un flux de fluide projeté un élément de soufflage externe.
- le tapis comprend un élément de soufflage interne d'air comprimé pour l'évacuation des impuretés précédemment tombées à l'intérieur du tapis sous l'action de l'élément de soufflage externe.
- l'installation de séchage des chairs comprend un tapis, ce tapis présentant une bande lisse de réception des chairs, au moins une buse de soufflage d'air comprimé étant disposée latéralement au dit tapis et projetant sur le tapis de l'air comprimé avec une inclinaison par rapport à la verticale, les impuretés plus petites et plus légères que les chairs non encore éliminées étant éjectées latéralement au tapis et recueillies dans un collecteur.

L'invention va maintenant être décrite plus en détail mais de façon non limitative en regard des figures annexées, dans lesquelles :
- la figure 1 est une représentation schématique d'une vue de dessus d'une première partie du dispositif de décorticage selon la présente invention, montrant essentiellement le bloc de décorticage dudit dispositif,
- la figure 2 est une représentation schématique d'une vue en perspective latérale de deux cylindres de décorticage faisant partie du dispositif selon l'invention,
- la figure 3 est une représentation schématique d'une vue de dessus de la seconde partie du dispositif de décorticage selon la présente invention, cette seconde partie se trouvant en aval de la première partie et montrant essentiellement des installations de triage et de séchage dudit dispositif,
- la figure 4 est une vue latérale en perspective d'un mode de réalisation d'une installation de triage faisant partie du dispositif selon l'invention,
- la figure 5 est une coupe transversale d'un mode de réalisation d'une installation de séchage faisant partie du dispositif selon l'invention,
- la figure 6 est une vue en perspective d'un autre mode de réalisation d'une installation de séchage faisant partie du dispositif selon l'invention,
- la figure 7 est une vue en coupe d'un mode de réalisation d'un bulleur faisant partie du dispositif selon l'invention.

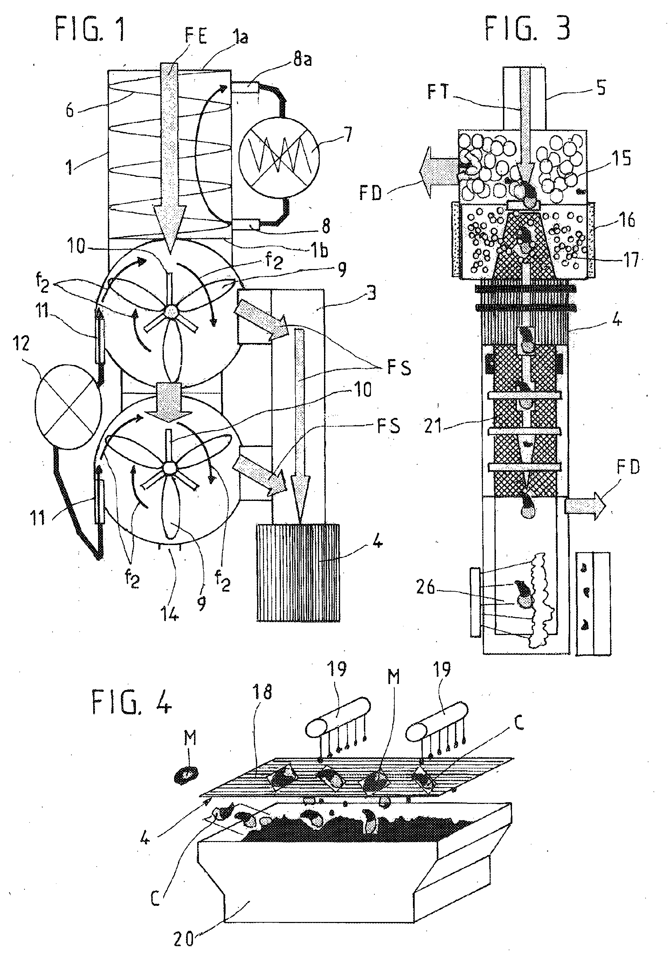

La figure 1 montre un dispositif de décorticage de mollusques marins pourvus d'une coquille, ces mollusques arrivant par groupes entraînés dans un flux liquide. Ces mollusques peuvent arriver en groupes ayant été préalablement surgelés et nettoyés mais ceci n'est pas limitatif.

Il peut se montrer très avantageusement de tuer ou d'anesthésier les mollusques avant décorticage. Ceci peut être fait par congélation mais aussi par d'autres moyens, comme par exemple par traitement thermique des mollusques, notamment mais pas uniquement par passage dans un four vapeur sous pression.

Le dispositif comprend, à son entrée, un cylindre 1 d'admission du groupe de mollusques, ce cylindre 1 s'étendant sensiblement en position horizontale ou légèrement incliné vers le bas à sa partie débouchant sur le reste du dispositif de décorticage. Ce cylindre 1 reçoit un groupe de mollusques par une première extrémité 1a en étant au moins partiellement rempli d'un flux liquide entraînant ledit groupe. Le cylindre 1 est muni intérieurement d'une vis sans fin 6 s'étendant dans sa longueur afin d'entraîner le groupe de mollusques selon la flèche FE vers la seconde extrémité du cylindre 1b débouchant sur le reste du dispositif de décorticage.

Le cylindre 1 est raccordé à une pompe 7 pour la circulation d'un liquide constituant le liquide d'entraînement du groupe de mollusques à décortiquer, avantageusement de l'eau de mer chauffée, filtrée et assainie aux ultra-violets mais un autre liquide peut être utilisé selon les circonstances. Il est prévu une entrée 8 et une sortie 8a de liquide dans le cylindre 1 pour la circulation de liquide dans ce cylindre 1. Le cylindre 1, horizontal comme précédemment mentionné, peut ainsi être avantageusement à demi-rempli de liquide, avantageusement de l'eau de mer.

Quand le groupe de mollusques est préalablement congelé, le cylindre 1 peut aussi servir à la récupération de calories lors de la décongélation du groupe de mollusques en comprenant des éléments de récupération de calories qui sont ensuite recyclées pour la congélation préalable d'un autre groupe de mollusques.

Le dispositif comprend un bloc de décorticage formé d'au moins un cylindre de décorticage 2. Avantageusement, comme illustré à la figure 1, le dispositif comprend deux cylindres de décorticage 2 et 2a disposés l'un après l'autre, le cylindre de décorticage 2 le plus en amont alimentant le cylindre de décorticage 2a placé en aval, comme il sera expliqué ultérieurement. Dans le cas de deux cylindres de décorticage 2 et 2a, ces cylindres sont sensiblement similaires.

Un tel cylindre de décorticage 2 ou 2a est disposé sensiblement verticalement, en contenant le groupe de mollusques dans un flux liquide. La séparation des coquilles des chairs des mollusques se fait par choc contre un élément de frappe prévu dans le cylindre 2 ou 2a. Pour cela, le cylindre de décorticage 2 ou 2a présente une hélice de frappe 10 qui heurte les coquilles et sépare les chairs des morceaux de coquille.

Cette hélice de frappe 10 présente avantageusement des pales en tôle perforée en acier inoxydable ou tout autre matériau adapté à l'élément liquide (titane, téflon ou autre). Il est à garder à l'esprit qu'une autre sorte d'élément de frappe qu'une hélice peut aussi être envisagée, comme par exemple une boule tournante ou un élément tournant à pointes du type hérisson.

Afin d'effectuer la séparation des chairs des morceaux de coquille, le cylindre de décorticage 2 ou 2a présente une hélice de brassage 9 créant un courant ascendant dans le cylindre 2 ou 2a dans le sens des flèches f2. Le cylindre de décorticage 2 ou 2a présente aussi une bouche d'entrée 11 latérale d'admission d'un jet liquide sous pression à l'intérieur du cylindre 2 ou 2a, une pompe 12 alimentant avantageusement le cylindre quand celui-ci est unique, ou chaque cylindre 2 ou 2a, une même pompe 12 pouvant être raccordée aux deux cylindres 2 ou 2a par une conduite différente. Ainsi, l'étape de décorticage des mollusques se fait avantageusement sous agitation mécanique.

Par la conjonction de l'hélice de brassage 9 et du jet liquide, la majeure partie des coquilles tombe au fond du cylindre de décorticage 2 ou 2a tandis que l'hélice de brassage 9, avantageusement munie de pales inclinées créant une turbidité ascendante, et le jet liquide créent un courant ascendant dans le sens des flèches f2 remontant les chairs et le reste des coquilles. Ces chairs sont évacuées selon la flèche FS par une conduite 3 pour être triées, cette conduite 3 présentant une bouche de sortie à l'extrémité supérieure latérale du cylindre de décorticage 2 ou 2a. Un triage est judicieux étant donné que des impuretés restantes peuvent encore être adjointes aux chairs.

Dans la présente demande, il sera désigné par impuretés tout corps étranger autres que des chairs, par exemple algues, divers cailloux, sable, surnageants divers et morceaux de coquilles. Ceci est principalement dû au fait qu'un mollusque vivant se fixe souvent sur une coquille vide d'un mollusque mort, cette dernière coquille pouvant être remplie de divers corps étrangers qui sortent de la coquille vide lors de l'étape de décorticage.

Ainsi il existe des impuretés plus légères que les chairs et pouvant être flottantes, par exemple des algues, et des impuretés plus lourdes que les chairs, par exemple des coquilles ou des morceaux de coquilles.

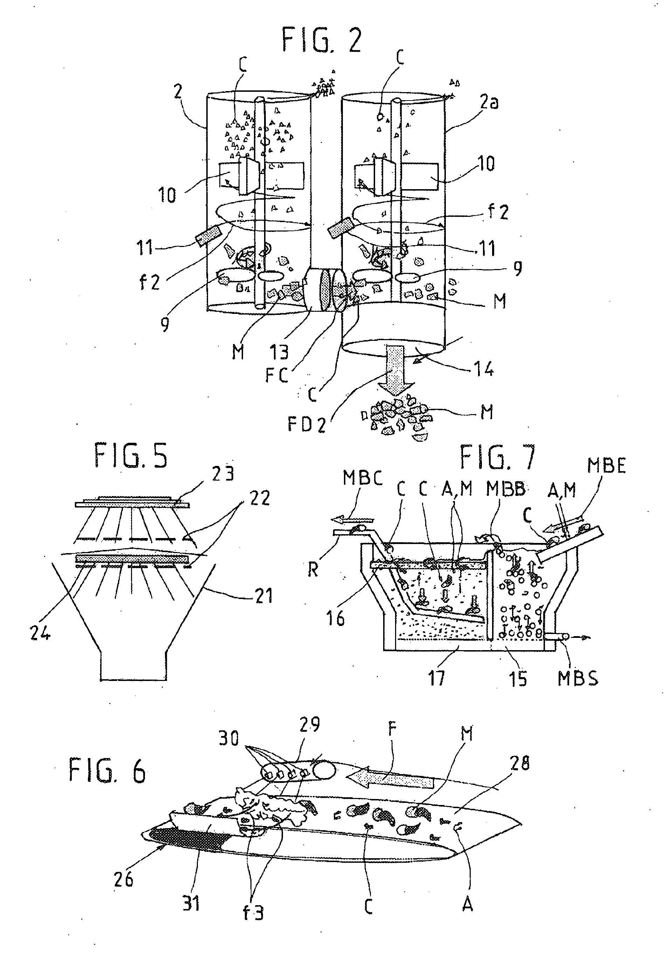

La figure 2 montre un bloc de décorticage composé de deux cylindres de décorticage 2 ou 2a consécutifs. En plus des caractéristiques des cylindres 2 ou 2a déjà montrées par la figure 1, à cette figure 2 est visible la trappe d'ouverture 13 faisant communiquer le premier cylindre de décorticage 2 le plus en amont du dispositif avec le second cylindre 2a le plus en aval. La circulation de liquide s'opère du cylindre 2 le plus en amont vers le cylindre 2a le plus en aval du dispositif selon la flèche FC.

Le flux de liquide pénétrant dans le cylindre de décorticage 2a le plus en aval est chargé en morceaux de coquilles M mais contient encore des chairs C qui n'ont pas été évacuées par la conduite 3 sortant à l'extrémité supérieure latérale du cylindre 2 le plus en amont. Ce flux de liquide peut aussi contenir des coquilles qui n'ont pas été frappées dans le cylindre de décorticage 2 le plus en amont et qui vont être frappées dans ce cylindre de décorticage 2a le plus en aval. Ce cylindre 2a le plus en aval présente comme précédemment mentionné une hélice de frappe 10 respective et le processus de frappe s'effectue dans ce cylindre 2a comme précédemment décrit.

La figure 2 montre aussi une bouche de sortie 14 des coquilles vides et morceaux de coquilles M à l'extrémité inférieure du cylindre 2a le plus en aval selon la flèche FD2. Une telle bouche 14 peut aussi être sur un cylindre de décorticage unitaire.

Les coquilles ainsi évacuées du cylindre de décorticage 2a le plus en aval sont recueillies, triées et concassées. Elles peuvent être recyclées, notamment pour la potabilité de l'eau, comme complément calcique pour poules pondeuses ou matière de départ servant de base pour peintures sur les routes.

En se référant de nouveau à la figure 1, comme précédemment mentionné, le dispositif de décorticage selon l'invention comprend à la sortie des cylindres de décorticage 2 et 2a une conduite 3 qui dirige les chairs extraites des coquilles vers une ou des installations de triage séparant les chairs du reste des coquilles ou d'autres impuretés, une installation de criblage 4 est représentée à cette figure comme illustration de l'installation de triage.

Dans le dispositif selon l'invention, il peut en effet être prévu une plusieurs installations de triage et une plusieurs installations de séchage à la sortie du bloc de décortication. Les modes de réalisation de ces installations de triage et de séchage montrés à la figure 3 sont simplement illustratifs et ces modes peuvent être pris en combinaison ou séparément, de même que d'autres modes de réalisation de triage et/ou de séchage peuvent aussi être mis en oeuvre.

A la figure 3, il est représenté plusieurs modes de réalisation d'installations de triage, notamment un laminaire 5, un bain à grosses bulles 15, un bain à micro-bulles 17 et une installation de criblage 4.

La flèche FT indique le sens de parcours des chairs avec les impuretés et la flèche FD indique l'évacuation des impuretés après triage. En fin de parcours des chairs, celles-ci peuvent être conditionnées en frais, blanchies et/ou surgelées mécaniquement ou par azote liquide. En sortie, le produit fini formé des chairs peut subir une opération de pesée et de conditionnements primaire et secondaire.

Dans le laminaire 5, les chairs et le reste des impuretés non encore éliminées dans le bloc de décortication sont amenés par le flux de liquide traversant le laminaire dans sa longueur. Les impuretés les plus lourdes tombent au fond sur un tapis d'évacuation.

Deux bains à bulles consécutifs sont aussi montrés à la figure 3. Le premier bain 15 est à grosses bulles faisant remonter les chairs et évacuant les impuretés par une chasse au fond. Les chairs passent dans le second bain 17 à micro-bulles par débordement et des filtres en mousse disposés sur les côtés latéraux du bain 17 retiennent les impuretés. Les bains à bulles sont avantageusement dans un plan horizontal. Il est aussi possible de ne prévoir qu'un unique bain à bulle, celui-ci étant avantageusement à micro-bulles.

Ces deux bains 15 et 17 sont suivis par une installation de criblage 4, illustrant une autre forme d'installation de triage.

Ceci sera mieux vu à la figure 4. L'installation de criblage 4 comprend un jeu de barres 18 vibrantes parallèles entre elles, la distance entre barres 18 vibrantes étant déterminée pour laisser passer les chairs C tout en retenant les morceaux de coquilles M. Avantageusement, ces barres sont rondes, en acier inoxydable ou autre (titane par exemple) et espacées en correspondance avec l'espèce de mollusques traités. Pour un mollusque du type « crepidula fornicata », la distance entre barres 18 est préférentiellement de 7 mm. Il est à noter que la forme plate spécifique de la chair de crépidule crue, leur permet de passer facilement entre les barres du crible.

Cette installation de criblage 4 comprend aussi des rampes 19 d'arrosage de liquide, de préférence de l'eau de mer filtrée et traitée aux UV. Ces rampes 19 sont disposées au dessus des barres 18 avec des buses de projection de liquide en vis-à-vis de la face du jeu de barres 18 sur laquelle passent les chairs récupérées des mollusques, le jet de liquide étant perpendiculaire au plan formé par les barres 18.

Les chairs C passent entre les barres 18 vibrantes du fait, d'une part, de l'arrosage de liquide .qui a un effet lubrifiant et, d'autre part, des vibrations exercées sur ces barres 18. Un bac de récupération 20 des chairs C est prévu en dessous du jeu de barres 18. Les morceaux de coquilles M n'ont pas l'espace pour passer et sont évacués en passant sur le jeu de barres 18.

La figure 5 montre un mode de réalisation d'une installation de séchage 21 des chairs faisant partie du dispositif selon la présente invention. L'installation de séchage 21 comprend un tapis à mailles 22. Sa partie supérieure portant les chairs est soumise à un flux d'air comprimé par un élément de soufflage externe 23. Le tapis 22 comprend un élément de soufflage interne 24 d'air comprimé pour l'évacuation des impuretés précédemment tombés à l'intérieur du tapis 22 sous l'action de l'élément de soufflage externe 23.

La figure 6 montre un autre mode de réalisation d'une installation de séchage 26 des chairs faisant partie du dispositif selon la présente invention, ce mode pouvant être pris isolément ou en combinaison avec le premier mode décrit pour le séchage.

Dans ce mode de réalisation d'une installation de séchage 26, il est prévu un tapis 28 avec une soufflette oblique 29. Ce tapis 28, en avancement selon la flèche F, présente une bande lisse de réception des chairs C avec des impuretés comme des morceaux de coquille M ou des algues A, une buse 29 de soufflage d'air comprimé étant disposée latéralement au dit tapis 28 et projetant à l'aide de buses 30 sur le tapis 28 de l'air comprimé avec une inclinaison par rapport à la verticale, les impuretés M ou A non encore éliminées étant éjectées latéralement au tapis 28 selon les flèches f3 et recueillies dans un collecteur 31. La forme spécifique des chairs de crépidules, forme aplatie, leur permet d'adhérer au tapis lisse et de ne pas être projetées comme les impuretés, par le flux d'air oblique.

La figure 7 est une vue en coupe d'un mode de réalisation d'un bulleur faisant partie du dispositif selon l'invention sans que cela soit limitatif.

Ce bulleur combine le bain à grosses bulles 15 et le bain à micro-bulles 17 déjà montrés à la figure 3. Dans le bain à grosses bulles 15, les chairs C et les impuretés A, M sont introduites par le haut du bain à grosses bulles 15 selon la flèche MBE, une partie des impuretés A, M sont évacuées par la sortie MBS à la partie inférieure du bain 15 et les chairs C, dé plus grand volume et entraînés par les grosses bulles montantes, passent par débordement selon la flèche MBB dans le bain à micro-bulles 17.

Dans ce bain à micro-bulles 17, les impuretés les plus légères des impuretés A, M restantes sont entraînés vers le haut du bain 17 vers un filtre en mousse 16 tandis que les chairs C sont recueillies et évacuées sur une rampe R s'étendant d'une portion inférieure du bain 17 vers une extrémité supérieure de ce bain 17. Les chairs C sont évacuées hors du bain à micro-bullles 17 par cette extrémité supérieure selon la flèche MBC.

L'invention n'est nullement limitée aux modes de réalisation décrits et illustrés qui n'ont été donnés qu'à titre d'exemples.

## Revendications

1. Procédé de décorticage de mollusques marins pourvus d'une coquille, ces mollusques arrivant par groupes dans un flux liquide, ce procédé comprenant les étapes suivantes :
- acheminement à contre courant d'un groupe de mollusques dans son flux liquide vers un bloc de décorticage comportant un élément de frappe (10),
- décorticage des mollusques du groupe dans son flux liquide par choc avec l'élément de frappe (10) et séparation des chairs (C) d'avec les coquilles des mollusques du fait de cette frappe et remontée des chairs par un flux ascendant, une majeure partie des coquilles, d'une part, et les chairs (C) contenant le reste des coquilles, d'autre part, étant évacuées séparément dans un flux liquide respectif,
- pour le flux liquide des chairs (C) contenant le reste des coquilles, séparation des chairs (C) et du reste des coquilles ou autres impuretés (A, M),
- nettoyage des chairs et séparation des flottants et impuretés par étape de dégrillage vibrant, de bullage et de microbullage,
- séchage des chairs (C) avec élimination des impuretés (A, M) restantes mêlées à ces chairs (C) par soufflage.

2. Procédé selon la revendication 1, dans lequel l'étape de décorticage des mollusques se fait sous agitation mécanique.

3. Procédé selon la revendication 1 ou 2, dans lequel les groupes sont préalablement surgelés et nettoyés avant l'étape d'acheminement, l'étape d'acheminement comportant une étape de décongélation du groupe à contre courant dans de l'eau de mer, avec récupération des calories du système mécanique de génération de froid.

4. Dispositif de décorticage de mollusques marins pourvus d'une coquille, ces mollusques arrivant par groupe dans un flux liquide, ce dispositif comprenant :
- un cylindre (1) d'admission du groupe de mollusques, ce cylindre (1) étant sensiblement en position horizontale, recevant le groupe de mollusques par une première extrémité (1a) en étant au moins partiellement rempli d'un flux liquide entraînant ledit groupe et muni d'une vis sans fin (6) dans sa longueur afin d'entraîner le groupe vers la seconde extrémité (1b) du cylindre,
- au moins un premier cylindre (2, 2a) vertical de décorticage des mollusques du groupe dans un flux liquide par choc mécanique avec séparation des chairs (C) et des coquilles des mollusques, ledit cylindre (2, 2a) présentant une hélice de frappe (10) et une hélice de brassage (9) créant un courant ascendant dans le cylindre (2, 2a) ainsi qu'une bouche d'entrée latérale (11) d'un jet liquide sous pression, la majeure partie des coquilles frappées par l'hélice de frappe (10) tombant au fond du cylindre de décorticage (2, 2a) tandis que l'hélice de brassage (9) et le jet liquide créent un courant ascendant remontant les chairs (C) et le reste des coquilles ou autres impuretés (A, M), évacuées par débordement en aval du dispositif.
- au moins une installation de triage (4, 5, 16, 17) séparant les chairs (C) du reste des coquilles ou autres impuretés (A, M),
- au moins une installation de séchage (21, 26) des chairs (C) avec élimination des impuretés (A, M) restantes mêlées à ces chairs (C) par soufflage.

5. Dispositif selon la revendication précédente, dans lequel il est prévu un second cylindre (2a) de décorticage, la partie inférieure du cylindre (2) de décorticage le plus en amont communiquant avec le cylindre (2a) de décorticage le plus en aval par une trappe (13) d'ouverture, le cylindre de décorticage (2a) le plus en aval présentant des hélices de frappe et de brassage (9, 10) ainsi qu'une bouche d'entrée latérale (11) d'un jet liquide sous pression similaires au cylindre (2) de décorticage le plus en amont.

6. Dispositif selon l'une quelconque des deux revendications précédentes, pour lequel l'installation de triage est une installation de criblage comprenant des barres (18) vibrantes parallèles entre elles sous un arrosage de liquide par au moins une rampe (19), la distance entre barres (18) vibrantes étant déterminée pour laisser passer les chairs (C) tout en retenant les morceaux de coquilles (M).

7. Dispositif selon l'une quelconque des trois revendications précédentes, pour lequel après le cylindre (2a) de décorticage le plus en aval, il est prévu au moins un bain à bulles (16 ou 17) rempli de liquide en tant qu'installation de triage.

8. Dispositif selon la revendication précédente, **caractérisé en ce qu'**il comporte un bain (17) à micro-bulles faisant remonter les impuretés (A, M) et les évacuant par débordement du bain et filtration, notamment par filtres en mousse, les chairs (C) plus lourdes et plus grosses n'étant pas remontées par le flux de micro-bulles qui sont trop petites et les impuretés étant récupérées en fond de bain à double paroi.

9. Dispositif selon la revendication 7, **caractérisé en ce qu'**il comporte deux bains à bulles (16 et 17) consécutifs, le premier bain (16) étant à grosses bulles faisant remonter les chairs (C) et évacuant les impuretés du type coquilles (A, M) les plus lourdes, tandis que le second bain est à micro-bulles (17) faisant remonter les impuretés légères flottantes du type micro-algues (A, M) et les évacuant par débordement du bain, les chairs (C) étant récupérées en fond de bain.

10. Dispositif selon l'une quelconque des six revendications précédentes, pour lequel l'installation de séchage (21) des chairs (C) comprend un tapis à mailles (22) soumis à sa partie de réception des chairs (C) à un flux de fluide projeté un élément de soufflage externe (23).

11. Dispositif selon la revendication précédente, pour lequel, le tapis (22) comprend un élément de soufflage interne (24) d'air comprimé pour l'évacuation des impuretés (A, M) précédemment tombées à l'intérieur du tapis (22) sous l'action de l'élément de soufflage externe (23).

12. Dispositif selon l'une quelconque des huit revendications précédentes, pour lequel l'installation de séchage (26) des chairs (C) comprend un tapis (26), ce tapis présentant une bande lisse de réception des chairs (C), au moins une buse (29) de soufflage d'air comprimé étant disposée latéralement au dit tapis (26) et projetant sur le tapis de l'air comprimé avec une inclinaison par rapport à la verticale, les impuretés plus petites et plus légères que les chairs (A, M) non encore éliminées étant éjectées latéralement au tapis (26) et recueillies dans un collecteur (31), tandis que les chairs adhèrent grâce à leur forme spécifique à la bande lisse.

## Patentansprüche

1. Verfahren zum Schälen von mit einer Schale versehenen Meeresweichtieren, wobei diese Weichtiere in Gruppen in einem Flüssigkeitsstrom ankommen, wobei dieses Verfahren die folgenden Schritte enthält:
- Gegenstrom-Beförderung einer Gruppe von Weichtieren in ihrem Flüssigkeitsstrom zu einem Schälblock, der ein Schlagelement (10) aufweist,
- Schälen der Weichtiere der Gruppe in ihrem Flüssigkeitsstrom durch Zusammenprall mit dem Schlagelement (10) und Trennung des Fleischs (C) von den Schalen der Weichtiere aufgrund dieses Schlags und Auftrieb des Fleischs durch einen aufsteigenden Strom, wobei ein größerer Teil der Schalen einerseits und das den Rest der Schalen enthaltende Fleisch (C) andererseits getrennt in einem jeweiligen Flüssigkeitsstrom abgeführt werden,
- für den Flüssigkeitsstrom des den Rest der Schalen enthaltenden Fleischs (C), Trennen des Fleischs (C) und des Rests der Schalen oder anderer Verunreinigungen (A, M),
- Reinigen des Fleischs und Trennen der Schwimmkörper und Verunreinigungen durch einen Schritt des Vibrationssiebens, der Blasenbildung und der Mikroblasenbildung,
- Trocknen des Fleischs (C) mit Entfernen der verbleibenden Verunreinigungen (A, M), die mit diesem Fleisch (C) vermischt sind, durch Blasen.

2. Verfahren nach Anspruch 1, wobei der Schritt des Schälens der Weichtiere unter mechanischem Rühren erfolgt.

3. Verfahren nach Anspruch 1 oder 2, wobei die Gruppen vorab vor dem Beförderungsschritt tiefgekühlt und gereinigt werden, wobei der Beförderungsschritt einen Schritt des Auftauens der Gruppe im Gegenstrom in Meerwasser mit Wiedergewinnung der Kalorien vom mechanischen Kälteerzeugungssystem aufweist.

4. Vorrichtung zum Schälen von mit einer Schale versehenen Meeresweichtieren, wobei diese Weichtiere gruppenweise in einem Flüssigkeitsstrom ankommen, wobei diese Vorrichtung enthält:
- einen Einlasszylinder (1) für die Gruppe von Weichtieren, wobei dieser Zylinder (1) im Wesentlichen in waagrechter Stellung ist, die Gruppe von Weichtiere über ein erstes Ende (1a) empfängt, indem er zumindest teilweise mit einem Flüssigkeitsstrom gefüllt ist, der die Gruppe antreibt, und über seine Länge mit einer Förderschnecke (6) versehen ist, um die Gruppe zum zweiten Ende (1b) des Zylinders anzutreiben,
- mindestens einen ersten senkrechten Zylinder (2, 2a) zum Schälen der Weichtiere der Gruppe in einem Flüssigkeitsstrom durch mechanischen Aufprall mit Trennung des Fleischs (C) und der Schalen der Weichtiere, wobei der Zylinder (2, 2a) einen Schlagpropeller (10) und einen Umwälzpropeller (9), der einen aufsteigenden Strom im Zylinder (2, 2a) erzeugt, sowie eine seitliche Eingangsmündung (11) eines Druckflüssigkeitsstrahls aufweist, wobei der größte Teil der vom Schlagpropeller (10) geschlagenen Schalen auf den Boden des Schälzylinders (2, 2a) fällt, während der Umwälzpropeller (9) und der Flüssigkeitsstrahl einen aufsteigenden Strom erzeugen, der das Fleisch (C) und den Rest der Schalen oder anderen Verunreinigungen (A, M) nach oben treibt, die durch Überlaufen hinter der Vorrichtung abgeführt werden,
- mindestens eine Sortieranlage (4, 5, 16, 17), die das Fleisch (C) vom Rest der Schalen oder anderen Verunreinigungen (A, M) trennt),
- mindestens eine Trockenanlage (21, 26) des Fleischs (C) mit Entfernen der verbleibenden Verunreinigungen (A, M), die mit diesem Fleisch (C) vermischt sind, durch Blasen.

5. Vorrichtung nach dem vorhergehenden Anspruch, wobei ein zweiter Schälzylinder (2a) vorgesehen ist, wobei der am weitesten vorne liegende untere Teil des Schälzylinders (2) mit dem am weitesten hinten liegenden Schälzylinder (2a) über eine Öffnungsklappe (13) in Verbindung steht, wobei der am weitesten hinten liegende Schälzylinder (2a) Schlag- und Umwälzpropeller (9, 10) sowie eine seitliche Eingangsmündung (11) eines Druckflüssigkeitsstrahls ähnlich dem am weitesten vorne liegenden Schälzylinder (2) aufweist.

6. Vorrichtung nach einem der zwei vorhergehenden Ansprüche, bei der die Sortieranlage eine Siebanlage ist, die zueinander parallele vibrierende Stäbe (18) unter eine Berieselung mit Flüssigkeit durch mindestens eine Berieselungseinrichtung (19) enthält, wobei der Abstand zwischen den vibrierenden Stäben (18) so festgelegt wird, dass das Fleisch (C) durchgelassen wird, während die Schalenstücke (M) zurückgehalten werden.

7. Vorrichtung nach einem der drei vorhergehenden Ansprüche, bei der nach dem am weitesten hinten liegenden Schälzylinder (2a) mindestens ein mit Flüssigkeit gefülltes Sprudelbad (16 oder 17) als Sortieranlage vorgesehen ist.

8. Vorrichtung nach dem vorhergehenden Anspruch, **dadurch gekennzeichnet, dass** sie ein Mikroblasen-Sprudelbad (17) aufweist, das die Verunreinigungen (A, M) aufsteigen lässt und sie durch Überlaufen des Bads und Filtern abführt, insbesondere durch Schaumstofffilter, wobei das schwerere und gröbere Fleisch (C) nicht von dem Strom von Mikroblasen aufgetrieben wird, die zu klein sind, und die Verunreinigungen am Boden des doppelwandigen Bads wiedergewonnen werden.

9. Vorrichtung nach Anspruch 7, **dadurch gekennzeichnet, dass** sie zwei aufeinanderfolgende Sprudelbäder (16 und 17) aufweist, wobei das erste Bad (16) große Blasen hat, die das Fleisch (C) aufsteigen lassen und die schwersten Verunreinigungen von der Art Schalen (A, M) abführen, während das zweite Bad Mikroblasen (17) hat, die die schwimmenden leichten Verunreinigungen von der Art Mikroalgen (A, M) aufsteigen lassen und sie durch Überlaufen des Bads abführen, wobei das Fleisch (C) am Boden des Bads wiedergewonnen wird.

10. Vorrichtung nach einem der sechs vorhergehenden Ansprüche, bei der die Trockenanlage (21) des Fleischs (C) ein Maschenband (22) enthält, das in seinem Empfangsteil des Fleischs (C) einem Fluidstrom ausgesetzt ist, der von einem äußeren Blaselement (23) projiziert wird.

11. Vorrichtung nach dem vorhergehenden Anspruch, bei der das Band (22) ein inneres Druckluft-Blaselement (24) zur Entfernung der vorher unter der Wirkung des äußeren Blaselements (23) ins Innere des Bands (22) gefallenen Verunreinigungen (A, M) enthält.

12. Vorrichtung nach einem der acht vorhergehenden Ansprüche, bei der die Trockenanlage (26) des Fleischs (C) ein Band (26) enthält, wobei dieses Band einen glatten Streifen zur Aufnahme des Fleischs (C) aufweist, wobei mindestens eine Düse (29) zum Blasen von Druckluft seitlich des Bands (26) angeordnet ist und Druckluft mit einer Neigung bezüglich der Senkrechten auf das Band projiziert, wobei die noch nicht entfernten Verunreinigungen, die kleiner und leichter als das Fleisch (A, M) sind, seitlich vom Band (26) ausgeworfen und in einem Kollektor (31) aufgefangen werden, während das Fleisch aufgrund seiner spezifischen Form am glatten Streifen haftet.

## Claims

1. Method for shucking shellfish, this shellfish arriving in groups in a liquid stream, this method comprising the following steps:
- conveying a group of shellfish countercurrentwise in its liquid stream towards a shucking unit comprising a striker (10),
- shucking the shellfish of the group in its liquid stream by impact against the striker (10) and separating the flesh (C) from the shells of the shellfish as a result of this striking and conveying the flesh upward in an ascending stream, most of the shells, on the one hand, and the flesh (C) containing the shell remains, on the other, being removed separately in respective liquid streams,
- for the liquid stream of the flesh (C) containing the shell remains, separating the flesh (C) from the remains of the shells or other impurities (A, M),
- cleaning the flesh and separating the floaters and impurities using a vibrating screening, bubbling and microbubbling step,
- drying the flesh (C) with removal of the remaining impurities (A, M) mixed in with this flesh (C) by blowing.

2. Method according to Claim 1, in which the step of shucking the shellfish is performed with mechanical agitation.

3. Method according to Claim 1 or 2, in which the groups are frozen and cleaned beforehand prior to the conveying step, the conveying step involving a step of thawing the group countercurrentwise in seawater, with recuperation of the heat energy of the mechanical cold-generating system.

4. Device for shucking shellfish, this shellfish arriving in groups in a liquid stream, this device comprising:
- a cylinder (1) for admitting the group of shellfish, this cylinder (1) being more or less in a horizontal position, receiving the group of shellfish via a first end (1a) while being at least partially filled with a liquid stream carrying the said group and fitted with an endless screw (6) in its length so as to convey the group towards the second end (1b) of the cylinder,
- at least one first vertical shucking cylinder (2, 2a) for shucking the shellfish of the group in a liquid stream by mechanical impact with separation of the flesh (C) and of the shells of the shellfish, the said cylinder (2, 2a) having a striking helix (10) and an agitation helix (9) creating an upwards flow in the cylinder (2, 2a) and a lateral inlet (11) for a pressurized jet of liquid, most of the shells struck by the striking helix (10) dropping to the bottom of the shucking cylinder (2, 2a) while the agitation helix (9) and the liquid jet create an upwards flow carrying the flesh (C) and the shell remains or other impurities (A, M) upwards to be discharged by overspilling downstream of the device,
- at least one sorting station (4, 5, 16, 17) separating the flesh (C) from the shell remains or other impurities (A, M),
- at least one drying station (21, 26) for drying the flesh (C) with removal of the remaining impurities (A, M) mixed in with this flesh (C) by blowing.

5. Device according to the preceding claim, in which a second shucking cylinder (2a) is provided, the lower part of the most upstream shucking cylinder (2) communicating with the most downstream shucking cylinder (2a) via an opening hatch (13), the most downstream shucking cylinder (2a) having striking and agitation helices (9, 10) as well as a lateral inlet (11) for a pressurized jet of liquid which are similar to those of the most upstream shucking cylinder (2).

6. Device according to either one of the two preceding claims, for which the sorting station is a screening station comprising mutually parallel bars (18) vibrating under a spray of liquid sprayed by at least one spray line (19), the distance between vibrating bars (18) being determined so as to allow the flesh (C) through while keeping back the pieces of shell (M).

7. Device according to any one of the three preceding claims, for which after the most downstream shucking cylinder (2a) there is at least one bubbling bath (16 or 17) filled with liquid by way of sorting station.

8. Device according to the preceding claim, **characterized in that** it comprises a microbubbling bath (17) that causes the impurities (A, M) to rise to the surface and removes them by overspilling from the bath and filtration, notably using foam filters, the heavier and larger flesh (C) not being raised to the surface by the stream of microbubbles which are too small and the impurities being recovered at the bottom of the double-walled bath.

9. Device according to Claim 7, **characterized in that** it comprises two consecutive bubbling baths (16 and 17), the first bath (16) having large bubbles causing the flesh (C) to rise to the surface and removing the heaviest impurities of the shell type (A, M), while the second bath has microbubbles (17) causing the floating lightweight impurities of microalgae type (A, M) to rise to the surface and be removed by overspilling from the bath, the flesh (C) being recovered at the bottom of the bath.

10. Device according to any one of the six preceding claims, for which the flesh (C) drying station (21) comprises a chain-link belt (22) which, in its part that receives the flesh (C), is subjected to a stream of fluid blasted by an external blower (23).

11. Device according to the preceding claim, for which the belt (22) comprises an internal compressed-air blower (24) for removing the impurities (A, M) that have previously fallen down inside the belt (22) under the action of the external blower (23).

12. Device according to any one of the eight preceding claims, for which the flesh (C) drying station (26) comprises a belt (26), this belt having a smooth belt band on which the flesh (C) is received, at least one compressed-air blowing nozzle (29) being positioned laterally to the said belt (26) and blasting compressed air onto the belt at an inclination with respect to the vertical, the impurities which are smaller and lighter in weight than the flesh (A, M) and which have not yet been eliminated being ejected laterally to the belt (26) and collected in a collector (31), while the flesh sticks to the smooth belt band because of the specific shape of this flesh.
